Europäisches Patentamt

(19) European Patent Office

Office européen des brevets

(11) Publication number : **0 430 413 B1**

(12) **EUROPEAN PATENT SPECIFICATION**

(45) Date of publication of patent specification :
14.09.94 Bulletin 94/37

(51) Int. Cl.⁵ : **H04L 25/30,** H04L 1/00, H03M 13/12

(21) Application number : **90311158.1**

(22) Date of filing : **11.10.90**

(54) **Data symbol estimation.**

(30) Priority : **29.11.89 GB 8927005**

(43) Date of publication of application :
**05.06.91 Bulletin 91/23**

(45) Publication of the grant of the patent :
**14.09.94 Bulletin 94/37**

(84) Designated Contracting States :
**DE FR GB IT SE**

(56) References cited :
EP-A- 0 302 330
IEEE COMMUNICATIONS MAGAZINE. vol. 21,
no. 1, January 1983, US pages 11 - 19;V. K.
Bhargava: "Forward error correction
schemes for digital communications"
IEEE TRANSACTIONS ON COMMUNI-
CATIONS. vol. 37, no. 8, August 1989, NEW
YORK USpages 785 - 789; G. Fettweiss, H.
Meyr: "Parallel Viterbi algorithmimplementa-
ion: breaking the ACS - bottleneck"

(73) Proprietor : **NOKIA MOBILE PHONES (U.K.)
LIMITED
Ashwood House,
Pembroke Broadway
Camberley, Surrey GU15 3SP (GB)**

(72) Inventor : **Farahati, Nader
9 Jackson Road
Cambridge, CB4 2RQ (GB)**

(74) Representative : **Frain, Timothy John
Patent Department
Nokia Mobile Phones
St Georges Court
St Georges Road
Camberley, Surrey GU15 3QZ (GB)**

## Description

This invention relates to a method and apparatus for estimating a data symbol in a sequence of transmitted data symbols received over a communication channel and has particular, but not exclusive application, in the equalization of data transmitted over radio channels. In the present specification digitised signals are referred to as data.

The problem of intersymbol interference resulting from transmission of data on dispersive communication channels is known and an equalization process is effected on the received signal in order to estimate the individual data symbols which were originally transmitted. Various types of equalizer are know but of particular interest in the present context are so-called Viterbi equalizers based on the Viterbi algorithm, which are a form of maximum likelihood (ML) detector.

Furthermore, for the purpose of forward error correction, data may be convolutionally encoded before it is transmitted. (Forward error correction means that the data is corrected at the receiver without the need for retransmission). A Viterbi detector may also be used for decoding convolutionally encoded data.

In the context of ML detection, a trellis diagram is commonly used to represent the progression of states with the passage of time. It is noted here that the number of states S is given by the equation $S = N^C$ where N is the number of symbols in the data alphabet used and C is the constraint length (ie. extent of intersymbol interference). Thus for a 2-symbol alphabet and a constraint length of 4 there are 16 possible states.

The term 'node' is usually used to designate a particular state at a particular time on a trellis diagram.

The arc or path representing the transition between two states (nodes) adjacent in time is known as a 'branch' and the associated 'branch metric' is an indication of the likelihood of the particular transition occurring. The 'partial path metric' represents the overall probability that a particular partial path to the left of the node under consideration represents the correct sequence of state transitions. The term 'partial path' is construed accordingly. This is the meaning of the terms partial path and partial path metric as they are used in the present specification, but the terms 'path' and 'path metric' may also be used to convey the same meaning. The overall path i.e. the path between the beginning and the end of the trellis which has the maximum path metric is the maximum likelihood path which essentially represents the best estimate of the data symbols actually transmitted.

For the avoidance of doubt, it is emphasized here that the path metric is a numerical value indicating the relative likelihood (probability) of a particular transition taking place. Throughout this specification the convention has been adopted that the maximum path metric represents the maximum likelihood, but depending on the manner in which the path metric is determined the converse may equally hold true, namely that the maximum likelihood may be represented by a minimum path metric. Therefore the term 'maximum' as used in this specification must be understood to include 'minimum' and likewise the words 'larger' and 'smaller' (and like terms) must be understood to include their converse meanings, viz 'smaller' and 'larger' respectively.

In theory a maximum likelihood (ML) or maximum a-posteriori (MAP) detector may be used to calculate the branch metrics for every branch in the trellis diagram and then determine the path metric for every path in the trellis diagram, and finally choose the path for which the overall path metric is a maximum. The sequence of symbols corresponding to this path is the estimate of the symbols actually transmitted. The difficulty with this approach is that the number of paths increases exponentially as the trellis diagram is traversed from left to right.

The Viterbi detector (mentioned earlier) is a computationally more efficient version of a ML detector which exploits the special structure of the detector to achieve a complexity that grows linearly rather than exponentially along the trellis. Hence, a Viterbi detector has the advantage that it requires a constant computation rate per unit time. For each node, the Viterbi detector selects the path having the largest partial path metric, called the 'survivor path' for that node. All partial paths other than the survivor path are discarded because any other partial path has by definition a smaller partial path metric, and hence if it replaced the survivor path in any overall path, the path metric would be smaller.

At each stage of the trellis it is not known which node the optimal path must pass through and so it is necessary to retain one survivor path for each and every node. The symbol associated with the survivor path, called the 'survivor', and the associated path metric have to be stored in memory for each node at a stage representing a particular time in order for the algorithm to proceed to the next stage at time increment t+1.

Only when the terminal node of the trellis has been reached is it possible to determine the unique path of maximum likelihood representing the estimation of the symbols actually transmitted. It is only at this stage that the estimated data symbols can be read off by effecting a "trace-back" along the identified maximum likelihood path.

The decisions made by a conventional Viterbi detector are 'hard' decisions in the sense that the estimated data symbols are restricted to correspond exactly to the data symbols of the particular alphabet used. For example, in the case of a 2-symbol alphabet the estimated data symbols are in strict binary digitized form (i.e. expressed in terms of only two levels, e.g. 0 and 1).

The known Viterbi detector has the drawback that an appreciable time delay occurs between detection and output. There are two main factors contributing to this delay. Firstly there is the so-called "truncation length" which is the temporal length of the survivor information stored in memory and secondly there is the so-called "trace-back delay" which is the time taken to process the survivor information, ie. the time between storing the survivor information in memory and outputting the estimated data decisions. The total time delay may typically amount to, say 70 bits which, by way of example, at a bit transmission rate of 270kb/s would correspond to a significant time delay of 0.26ms. This time lag is undesirable in data receivers generally, but is especially detrimental in the case of voice communication applications.

In addition it has to be noted that a Viterbi detector requires substantial memory capacity to store the survivor information.

European patent application EP-A-0,302,330 relates to a method of evaluating metrics for Viterbi decoding of convoluted code signals in which individual path decisions are made for each state by comparing the pair of 'opposing' path metrics, i.e. the path metrics associated respectively with two different symbol types [designated $M_A(x,k+1)$ and $M_B(x,k+1)$ in the present application]. For each state the first path metric [$M_A(x,k+1)$] of the opposing pair is calculated by adding the current branch metric [$b(x,k+1 \mid x_A,k)$] relating to a first symbol type [A] to the respective previous partial path metric [$M(x_A,k)$] and the second path metric [$M_B(x,k+1)$] of the pair is calculated by adding the current opposed branch metric [$b(x,k+1 \mid x_B,k)$], i.e. relating to a second symbol type [B], to the respective previous partial path metric [$M(x_B,k)$]. The two opposing path metrics are differenced [$M_A(x,k+1)-M_B(x,k+1)$] to yield a path decision for each state. Thus, in the case of sixteen states, sixteen path decisions (denoted DEC0, DEC1,...DEC15 in EP-A-0,302,330) will be made. Although that patent specification is not explicit in this regard, it is assumed that these path decisions are all stored in memory for selection and read back at a subsequent trace-back stage in the conventional manner of a Viterbi decoder. Also, for each state the two opposing path metrics are compared and the minimum value (MSEL0, MSEL1,...MSEL15) is selected for use as the previous partial path metric at the next transition stage of the trellis. A further stage (M-AND and PRE-MI) is provided for comparing all the minimum metrics (MSEL0, MSEL1,...MSEL15) and selecting the overall minimum value (MMIN) which is subtracted as an offset from each of the minimum metric values (MSEL0, MSEL1,...MSEL15) at each of the sixteen individual stages (viz. at subtractors SUB0, SUB1,...SUB15) in a process which may effectively be regarded as normalization. Additionally, the maximum of all the sixteen minimum metric values may be determined. The maximum and minimum values of the complete set of minimum metrics (SEL0, SEL1,...SEL15) may be differenced to provide a so-called differential metric which (as mentioned in passing in EP-A-0,302,330) may be used, for example, for synchronization or for phase ambiguity resolution during Viterbi decoding.

The preamble of claim 1 is based on EP-A-0,302,330.

According to a first aspect of the present invention there is provided a method of estimating a data symbol in a sequence of transmitted data symbols received on a communication channel, wherein a plurality of different states is associated with the transmission of said data symbols, which method includes the steps of determining for each state the respective partial path metric ($M_A$) in respect of the state transition corresponding to the transmission of a first symbol type (A), and determining for each state the respective partial path metric ($M_B$) in respect of the state transition corresponding to the transmission of a second symbol type (B), characterized by selecting the maximum value ($M_{Amax}$ and $M_{Bmax}$) of the first and second symbol type partial path metrics respectively, and determining the difference ($M_{Amax}-M_{Bmax}$ or $M_{Bmax}-M_{Amax}$) between the respective maximum values of the first and second symbol type partial path metrics ($M_{Amax}$ and $M_{Bmax}$).

The difference between the respective maximum values of the first and second symbol type partial path metrics may be used directly as an estimate or "decision" of the transmitted data symbol.

An important advantage of a method in accordance with the present invention is that the decisions are made almost instantaneously and continuously, e.g. at the same rate as the symbol sampling rate which may be chosen to be the same as the symbol transmission rate. Certainly this method avoids delay associated with survivor storage and also the trace-back phase which are inherent features of the known Viterbi detector. Also, since the present method avoids the need for storing survivor information no memory is required for this purpose. The processing circuitry can therefore be less complex, and hence less costly in this regard.

Furthermore, the difference between the respective maximum values of the first and second symbol type partial path metrics may be used directly as a value indicative of the confidence level of an estimated data symbol. Thus a method in accordance with the invention has the benefit that it can yield soft decisions. That is to say, the estimated data symbols may be quantized at more levels than there are symbols in the alphabet being used (for example at eight levels in the case of a 2-symbol (binary) alphabet) and thus inherently convey certainty information as regards the confidence level of the decision made. In the case of convolutionally encoded data when soft decisions are decoded a significantly better error rate performance can be achieved for a given signal to noise ratio, as compared to the hard decisions generated by the conventional Viterbi decoder.

In a preferred embodiment the respective selection steps include comparing the partial path metric for each state in turn with a previously selected value to determine and select the larger of the two values.

According to a further aspect of the invention there is provided an arrangement for estimating a data symbol in a sequence of transmitted data symbols received on a communication channel, wherein a plurality of different states is associated with the transmission of said data symbols, including first means for determining for each state the respective partial path metric ($M_A$) in respect of the state transition corresponding to the transmission of a first symbol type (A), and second means for determining for each state the respective partial path metric ($M_B$) in respect of the state transition corresponding to the transmission of a second symbol type (B), characterized by means for selecting the maximum value ($M_{Amax}$ and $M_{Bmax}$) of the first and second symbol type partial path metrics respectively, and means for outputting a signal indicative of the difference ($M_{Amax}-M_{Bmax}$ or $M_{Bmax}-M_{Amax}$) between the maximum value of the first symbol type partial path metric ($M_{Amax}$) and the maximum value of the second symbol type partial path metric ($M_{Bmax}$).

Suitably an arrangement in accordance with the present invention includes means for comparing the first symbol type partial path metric for each state with a previously selected value to determine and select the larger of the two values and means for comparing the second symbol type partial path metric for each state with a previously selected value to determine and select the larger of the two values. Also, respective multiplexer means may be provided for applying the partial path metric for each state in turn to the respective comparing means.

In a preferred embodiment the arrangement additionally comprises means for quantising the signal from the outputting means into a plurality of quantization levels greater than the number of symbols in the data alphabet.

An embodiment of the invention will now be described, by way of example, with reference to the accompanying drawings, in which:

Figure 1 is a part of a 16-state trellis diagram illustrating the possible state transitions,

Figure 2 is a schematic diagram showing an arrangement for estimating a data symbol in accordance with the invention, and

Figures 3a, 3b and 3c show a sequence of (a) transmitted data symbols; (b) estimates of the transmitted symbols in the form of hard decisions; and (c) estimates of the transmitted symbols in the form of soft decisions.

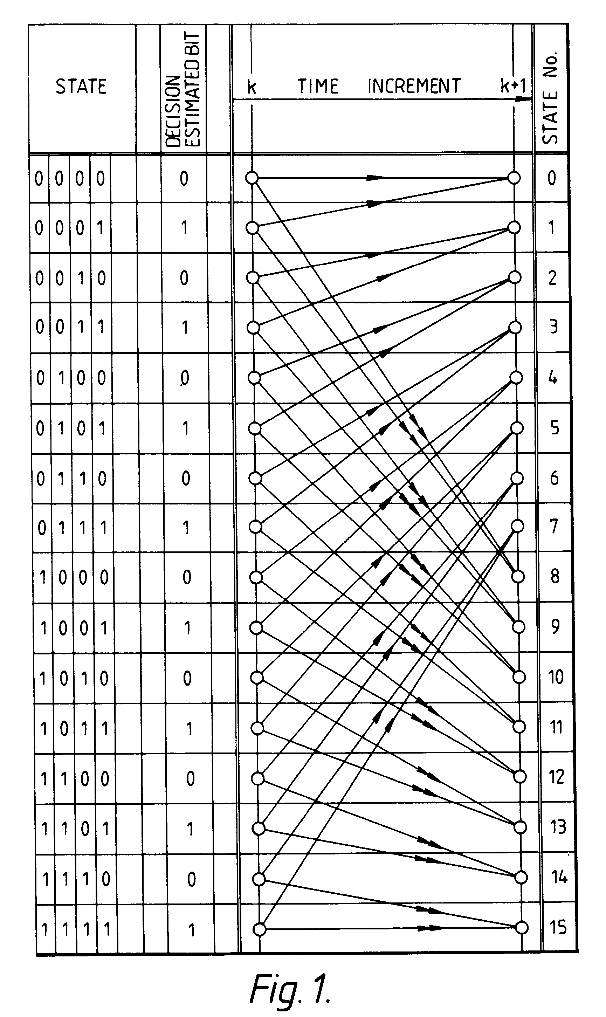

Figure 1 is a part of a trellis diagram for the 16 states associated with a 2-symbol alphabet in the case where the constraint length is 4. The two symbols may, for example, be +1 and -1 mapped from the single bits 1 and 0 respectively. The states (0000, 0001 ....1110, 1111) are shown in the left hand (first) column and the decision estimated bit (i.e. the least significant bit) is shown in the column to the right of its respective state. The partial trellis diagram itself shows the state transitions for all 16 states at a time k and an incremented time k+1. The time interval between k and k+1 corresponds to the time interval between successive transmitted data symbols. Transitions with a single arrowhead represent a, 0 transition bit, whereas transitions with a double arrowhead represent a 1 transition bit. By way of explanation, a state transition occurs as a result, of adding the transition bit to the current state in the position of the most significant bit and disregarding the least significant bit (i.e. the decision estimated bit) of the current state. The number of the state (0-15) is shown to the right of the trellis diagram.

In words, the partial path metric for any particular state 0 to 15 at time k+1 is given by the sum of the partial path metric at time k plus the branch metric between k and k+1. Expressed more mathematically in general terms:

$$M(x_{k+1}, k+1) = M(x_k, k) + b(x_{k+1}, k+1 \mid x_k, k)$$

where M is the partial path metric, b is the branch metric, $x_k$ is the state number, and k is the time index. Hence $M(x, k+1)$ is the partial path metric at state number $x_{k+1}$ at time k+1; $M(x, k)$ is the partial path metric at state number $x_{k+1}$ at time k; and $b(x, k+1 \mid x, k)$ is the branch metric at state number $x_k$ at time k + 1 given the state number $x_k$ at time k.

The branch metrics can be determined using conventional techniques which will be familiar to a person skilled in the art. Alternatively, a novel multiplier-less approach may be used in accordance with the invention which is the subject of our co-pending European patent publication No.EP-430428 claiming priority from UK patent application No. 8927006.0.

It can be seen from the trellis diagram that for each state at time k+1 there are two possible state transitions leading to that state. For each state one of these transitions corresponds to the transmission of one of the data symbols and the other transition corresponds to the transmission of the other data symbol. For the sake of generality these two symbols will now be referred to as A and B respectively, where A and B represents any binary alphabet mapped from the bits 0 and 1 respectively.

The partial path metrics can now be expressed more accurately for the two possible state transitions in the following general terms.

1)    $M_A(x,k+1) = M(x_A,k)+b(x,k+1 \mid x_A,k)$ for symbol A; and

2)    $M_B(x,k+1) = M(x_B,k)+b(x,k+1 \mid x_B,k)$ for symbol B.

Considering state number 0 at time k+1 and using the notation established above the respective partial path metrics of the two possible state transitions are given by:

1)    $M_A(0,k+1) = M(0,k)+b(0,k+1 \mid 0,k)$ for symbol A; and

2)    $M_B(0,k+1) = M(1,k)+b(0,k+1 \mid 1,k)$ for symbol B.

Likewise at state number 1, the two partial path metrics corresponding to a transmitted A and B symbol are:

1)    $M_A(1,k+1) = M(2,k)+b(1,k+1 \mid 2,k)$ for symbol A; and

2)    $M_B(1,k+1) = M(3,k)+b(1,k+1 \mid 3,k)$ for symbol B.

.... and so on until for example at state number 8 the situation is:

1)    $M_A(8,k+1) = M(0,k)+b(8,k+1 \mid 0,k)$ for symbol A; and

2)    $M_B(8,k+1) = M(1,k)+b(8,k+1 \mid 1,k)$ for symbol B.

At the last state number 15 the corresponding equations are:

1)    $M_A(15,k+1) = M(14,k)+b(15,k+1 \mid 14,k)$ for symbol A; and

2)    $M_B(15,k+1) = M(15,k)+b(15,k+1 \mid 15,k)$ for symbol B.

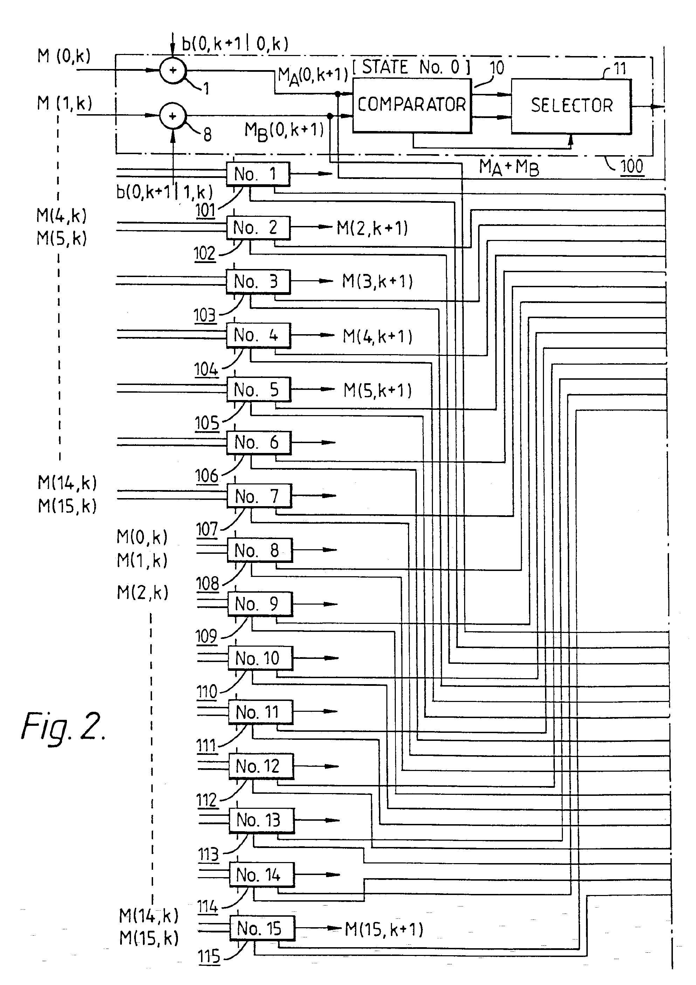

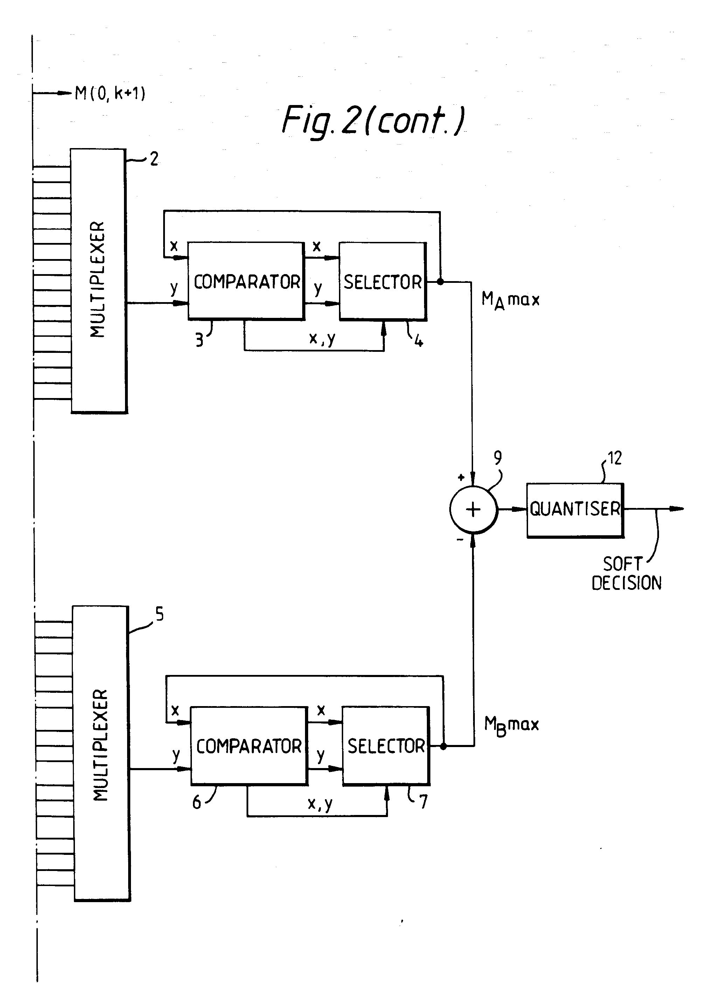

The arrangement in Figure 2 shows how the partial path metric information is processed to derive an almost immediate estimate of the current data symbol at time k+1.

Firstly consider state number 0. The value of the partial path metric M(0,k) is input into an adder 1 and the value of the branch metric $b(0,k+1 \mid 0,k)$ is input into the same adder 1. The two values are summed to give the partial path metric $M_A(0,k+1)$ corresponding to the transmission of a symbol A. The value of $M_A(0,k+1)$ is input to a multiplexer 2. Fifteen other inputs from processing blocks 101-115 respectively are likewise input to the multiplexer 2, in the following order $M_A(1,k+1)$, $M_A(2,k+1)$....$M_A(15,k+1)$ being the values of the partial path metrics at each of the fifteen remaining states numbered 1 to 15 respectively and corresponding to the transmission of a transmitted data symbol A. The processing blocks 101-115 for states 1 to 15 respectively are all functionally equivalent to the processing block 100 for state 0, shown bounded by a chain line in Figure 2. Under the control of a clock (not shown) the multiplexer transmits each of the partial path metric input values as a first input y to a comparator 3. The second input x to the comparator may initially be set at 0. The comparator indicates which is the larger of the two values x and y and the subsequent selector stage 4 selects the larger of the two values and feeds it back to the input x of comparator 3. The input x thus remains constant unless the input at y is greater in which case the input x assumes the higher value. Having compared all 16 partial path metrics the selector outputs the maximum value of the partial path metric for the symbol A over all sixteen states. This value is represented as $M_{Amax}$.

In an exactly analogous manner a separate arrangement of a multiplexer 5, comparator 6 and selector 7 are used to determine the maximum value of the partial path metrics for the B symbol over all sixteen states. Thus the multiplexer 5 has sixteen inputs, viz. $M_B(0,k+1)$....$M_B(15,k+1)$ being the values of the partial path metrics at each of the sixteen states respectively and corresponding to the transmission of a data symbol B.

The drawing shows how the value $M_B(0,k+1)$ is determined at adder 8 by summing the value of the partial path metric M(1,k) and the value of the branch metric $b(0,k+1 \mid 1,k)$ in accordance with the equation given above. The equivalent process is carried out at each of the fifteen remaining states to determine the respective partial path metric for the B symbol. The comparator 6 and selector 7 are effective to output the maximum value of the partial path metric for the symbol B over all sixteen states. This value is represented as $M_{Bmax}$. The value $M_{Amax}$ from selector 4 is fed to an adder 9. The value $M_{Bmax}$ is inverted (made negative) and also fed to the adder 9 which thus combines the two input values to give the difference $M_{Amax} - M_{Bmax}$. This is an immediate estimate of the currently observed data symbol in the form of a soft decision. Entirely by way of example, the Applicants have used a quantiser 12 to quantise the estimated data symbols into eight levels. The output from the quantiser 12 in this case is a sequence of three bits where 000 represents a first transmitted data symbol of the binary pair (i.e. A or -1) with maximum certainty, 001 represents the same data symbol with less certainty, 010 represents the same data symbol with even less certainty and 011 represents the same data symbol with minimum certainty. On the other hand 111 represents the other symbol of the binary pair (hence B or + 1) and 110, 101, and 100 represent the same symbol with gradually decreasing certainty.

It is noted that, depending on the internal arithmetic precision, the output from the adder 9 may already be quantized at the desired number of levels, in which case the quantiser 12 can be dispensed with.

So far the description has been limited to the estimation of an individual data symbol. However, the same

EP 0 430 413 B1

basic scheme can be repeated at each stage (time increment) of the trellis to estimate the entire sequence of transmitted symbols. Such a process is generally known in the art as signal equalization.

To this end the arrangement shown in Figure 2 includes additional stages to those already described as follows.

For each state 0 to 15 a further comparator 10 and selector 11 are provided within the respective processing blocks 100-115. (For the sake of clarity in Figure 2 the comparator 10 and selector 11 are actually shown only in the processing block 100, but the other processing blocks 101-115 correspond). Each comparator compares the two respective inputs at a given time, say k+1, corresponding to the partial path metrics corresponding to the transmission of an A and B symbol respectively. Thus as shown in Figure 2 for state number 0, the output $M_A(0,k+1)$ from adder 1 and the output $M_B(0,k+1)$ from adder 8 are applied to the comparator 10 and selector 11 which gives an output $M(0,k+1)$ corresponding to the maximum value of this pair of partial path metrics. This indicates the maximum likelihood path to the current state, so that the other path can be discarded. This information is used to estimate the transmitted data signal at the next successive increment k+2 when, in order to proceed along the trellis, it is necessary to know the partial path metric for each state at time k+1. Thus this same comparison and selection process is carried out in parallel for each of the sixteen states at each time increment.

In the case of convolutional channel code introduced for the purpose of error correction, the full sequence of estimated data symbols may be further processed by a decoder. The decoder may suitably be a conventional Viterbi decoder since only hard decisions are required at the decoder output. Alternatively, a decoder in accordance with the present invention may be employed, wherein only the hard decision component of the soft decision is utilized. The availability of soft decisions at the decoder input enables the overall bit error performance to be improved compared with hard decisions, since the decoder is able to utilize the certainty information in arriving at a final more accurate decision.

The decoder is used for recovering the original data from data which has been convolutionally encoded before transmission. In this case the partial path metrics $J_k$ are given by the equation

$$J_k = J_{k-1} + \sum_{i=1}^{R} \pm(\text{soft decision})_i$$

where $J_{k-1}$ is the previous partial path metric and R is the inverse of the code rate (i.e. R=2 for half rate code, R=3 for third rate code and so on, where the code rate indicates the redundancy level of the transmitted data, i.e. in half rate code two bits are used to encode a single bit (50% redundancy), and in third rate code three bits are used to encode a single bit (66% redundancy), etc). The plus or minus sign between terms is determined by the particular mapping scheme used.

Suitably, a 1 maps to a plus sign (+) and a 0 maps to a minus sign (-).

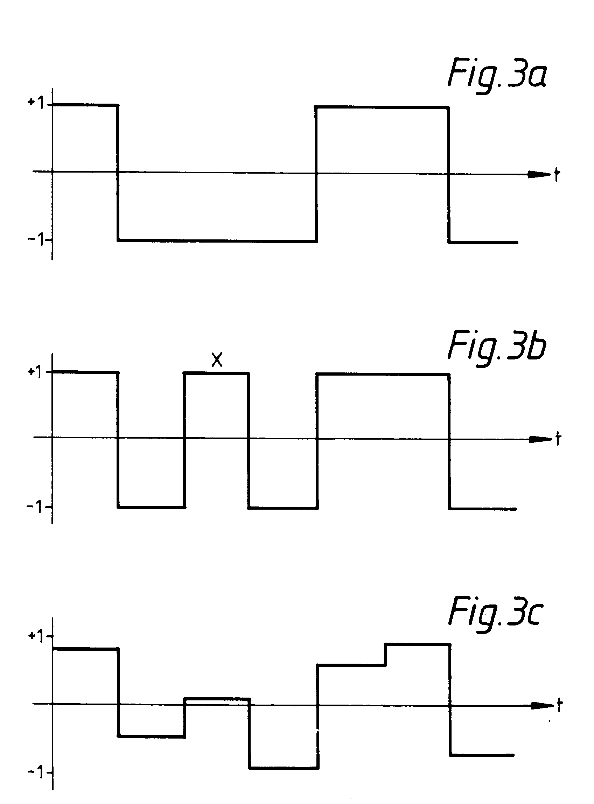

Figure 3 shows a typical sequence of soft decisions (estimated in accordance with the invention (see Figure 3c), in contrast to the equivalent hard decisions which may have been made by a prior art Viterbi detector (see Figure 3b), compared with the original encoded data symbols which were actually transmitted (see Figure 3a). It can be seen that in the case of the hard decisions a wrong decision was made for the symbol at X. By contrast, in the soft decision case this is estimated as a probable +1 symbol but with minimal certainty. At the decoder stage this uncertainty will be taken into account and may result in the effect of this particular decision with a high level of uncertainty being reversed, i.e. corrected. This is the reason why a receiver incorporating an equalizer in accordance with the invention has the potential to significantly improve the error rate performance for a given signal to noise ratio.

In view of the foregoing description it will be evident to a person skilled in the art that various modifications may be made within the scope of the invention. Also, it is noted that although the above description has concentrated on a binary data alphabet, the present invention is equally applicable to alphabets comprising more than two symbols. In this case the set of symbols may always be divided and re-divided symmetrically into sub-sets of symbols until there is ultimately a plurality of sub-sets each comprising only two symbols and the method of the present invention is then applied in respect of each such sub-set of two symbols as it applies to the two symbols (A and B) constituting a binary alphabet within that sub-set.

Finally, it is also noted that the decisions obtained using a method in accordance with the present invention may be combined with respective hard decision information derived separately using conventional Viterbi techniques. Thus, for example the hard decision may be used to represent the sign of the decision estimated bit (where a plus sign is mapped to 1 and a minus sign is mapped to 0) while the decision obtained using the present method is used to indicate the confidence level of the hard decision.

6

## Claims

1. A method of estimating a data symbol in a sequence of transmitted data symbols received on a communication channel, wherein a plurality of different states is associated with the transmission of said data symbols, which method includes the steps of

   determining for each state the respective partial path metric ($M_A$) in respect of the state transition corresponding to the transmission of a first symbol type (A), and

   determining for each state the respective partial path metric ($M_B$) in respect of the state transition corresponding to the transmission of a second symbol type (B),

   characterized by the steps of selecting the maximum value ($M_{Amax}$ and $M_{Bmax}$) of the first and second symbol type partial path metrics respectively, and

   determining the difference ($M_{Amax}$-$M_{Bmax}$ or $M_{Bmax}$-$M_{Amax}$) between the respective maximum values of the first and second symbol type partial path metrics ($M_{Amax}$ and $M_{Bmax}$).

2. A method as claimed in claim 1, including using the difference between the respective maximum values of the first and second symbol type partial path metrics as an estimate indicative of the transmitted data symbol.

3. A method as claimed in claim 1 including using the difference between the respective maximum values of the first and second symbol type partial path metrics as a value indicative of the confidence level of an estimated data symbol.

4. A method as claimed in claim 1, including using the difference between the respective maximum values of the first and second symbol type partial path metrics both as an estimate indicative of the transmitted data symbol and also as a value indicative of the confidence level of said estimate.

5. A method as claimed in claim 3 or 4, wherein the difference between the respective maximum values of the first and second symbol type partial path metrics is outputted at one of a plurality of quantization levels greater than the number of symbols in the data alphabet.

6. A method as claimed in any of the preceding claims, wherein the respective selection steps include comparing the partial path metric for each state in turn with a previously selected value to determine and select the larger of the two values.

7. An arrangement for estimating a data symbol in a sequence of transmitted data symbols received on a communication channel, wherein a plurality of different states is associated with the transmission of said data symbols, including

   first means (1) for determining for each state the respective partial path metric ($M_A$) in respect of the state transition corresponding to the transmission of a first symbol type (A), and

   second means (2) for determining for each state the respective partial path metric ($M_B$) in respect of the state transition corresponding to the transmission of a second symbol type (B), characterized by

   means (2,3,4) for selecting the maximum value ($M_{Amax}$ and $M_{Bmax}$) of the first and second symbol type partial path metrics respectively, and

   means (9) for outputting a signal indicative of the difference ($M_{Amax}$-$M_{Bmax}$ or $M_{Bmax}$-$M_{Amax}$) between the maximum value of the first symbol type partial path metric ($M_{Amax}$) and the maximum value of the second symbol type partial path metric ($M_{Bmax}$).

8. An arrangement as claimed in claim 7, comprising means (3,4) for comparing the first symbol type partial path metric for each state with a previously selected value to determine and select the larger of the two values and means (5,6) for comparing the second symbol type partial path metric for each state with a previously selected value to determine and select the larger of the two values.

9. An arrangement as claimed in claim 8, including respective multiplexer means (2;5) for applying the partial path metric for each state in turn to the respective comparing means (3,4;6,7).

10. An arrangement as claimed in any of claims 7 to 9, additionally comprising means for quantising the signal from the outputting means (9) into a plurality of quantization levels greater than the number of symbols in the data alphabet.

11. A data receiving apparatus comprising (i) an equaliser including an arrangement for estimating a data symbol as claimed in any of claims 7 to 10, and (ii) decoding means for decoding the signals issued by the outputting means (9), said decoding means also including an arrangement for estimating a data symbol as claimed in any of claims 7 to 10.

**Patentansprüche**

1. Verfahren zum Schätzen eines Datensymbols in einer Folge gesendeter Datensymbole, die über einen Verbindungskanal empfangen wurden, wobei der Sendung der Datensymbole eine Vielzahl von unterschiedlichen Zuständen zugeordnet ist und das Verfahren die Schritte enthält
daß für jeden Zustand die jeweilige Partialweg-Metrik ($M_A$) mit Bezug auf den Zustandsübergang entsprechend der Sendung eines ersten Symboltyps (A) bestimmt wird, und
daß für jeden Zustand die jeweilige Partialweg-Metrik ($M_B$) mit Bezug auf den Zustandsübergang entsprechend der Sendung eines zweiten Symboltyps (B) bestimmt wird,
gekennzeichnet durch die Schritte, daß der Maximalwert ($M_{Amax}$ und $M_{Bmax}$) der Partialweg-Metriken des ersten bzw. zweiten Symboltyps ausgewählt wird, und
die Differenz ($M_{Amax}$-$M_{Bmax}$ oder $M_{Bmax}$-$M_{Amax}$) der jeweiligen Maximalwerte der Partialweg-Metriken ($M_{Amax}$ und $M_{Bmax}$) des ersten bzw. zweiten Symboltyps bestimmt wird.

2. Verfahren nach Anspruch 1, welches die Benutzung der Differenz der jeweiligen Maximalwerte der Partialweg-Metriken des ersten bzw. zweiten Symboltyps als eine für das gesendete Datensymbol bezeichnende Schätzung enthält.

3. Verfahren nach Anspruch 1, welches die Benutzung der Differenz der jeweiligen Maximalwerte der Partialweg-Metriken des ersten bzw. zweiten Symboltyps als einen für das Vertrauensniveau eines geschätzten Datensymbols bezeichnenden Wert enthält.

4. Verfahren nach Anspruch 1, welches die Benutzung der Differenz der jeweiligen Maximalwerte der Partialweg-Metriken des ersten bzw. zweiten Symboltyps als einen sowohl für das gesendete Datensymbol bezeichnenden Schätzwert und auch als einen für das Vertrauensniveau der Schätzung bezeichnenden Wert enthält.

5. Verfahren nach Anspruch 3 oder 4, bei dem die Differenz der jeweiligen Maximalwerte der Partialweg-Metriken des ersten bzw. zweiten Symboltyps ausgegeben wird an einem einer Vielzahl von Quantisierungs-Niveaus, die größer als die Anzahl von Symbolen in dem Datenalphabet ist.

6. Verfahren nach einem der vorangehenden Ansprüche, bei dem die jeweiligen Auswahlschritte das Vergleichen der Partialweg-Metrik der Reihe nach für jeden Zustand mit einem vorher ausgewählten Wert enthalten, um den größeren der beiden Werte zu bestimmen und auszuwählen.

7. Anordnung zum Schätzen eines Datensymbols in einer Folge von gesendeten Datensymbolen, die an einem Verbindungskanal empfangen wurde, wobei der Sendung der Datensymbole eine Vielzahl von unterschiedlichen Zuständen zugeordnet ist, und die Anordnung enthält
erstes Mittel (1) zum Bestimmen der jeweiligen Partialweg-Metrik ($M_A$) für jeden Zustand mit Bezug auf den Zustandsübergang entsprechend der Sendung eines ersten Symboltyps (A), und
zweites Mittel (2) zum Bestimmen der jeweiligen Partialweg-Metrik ($M_B$) für jeden Zustand mit Bezug auf den Zustandsübergang entsprechend der Sendung eines zweiten Symboltyps (B), gekennzeichnet durch Mittel (2, 3, 4) zum Auswählen des Maximalwertes ($M_{Amax}$ und $M_{Bmax}$) der Partialweg-Metriken des ersten bzw. zweiten Symboltyps, und
Mittel (9) zum Ausgeben eines für die Differenz ($M_{Amax}$-$M_{Bmax}$ oder $M_{Bmax}$-$M_{Amax}$) zwischen dem Maximalwert der Partialweg-Metrik ($M_{Amax}$) für den ersten Symboltyp und dem Maximalwert der Partialweg-Metrik ($M_{Bmax}$) des zweiten Symboltyps bezeichnenden Signals.

8. Anordnung nach Anspruch 7, welche umfaßt Mittel (3, 4) zum Vergleichen der Partialweg-Metrik für den ersten Symboltyp für jeden Zustand mit einem vorher ausgewählten Wert, um den größeren der beiden Werte zu bestimmen und auszuwählen, und Mittel (5, 6) zum Vergleichen der Partialweg-Metrik für das zweite Symbol für jeden Zustand mit einem vorher gewählten Wert, um den größeren der beiden Werte zu bestimmen und auszuwählen.

9. Anordnung nach Anspruch 8, welche enthält jeweilige Multiplexermittel (2; 5), um die Partialweg-Metrik für jeden Zustand der Reihe nach an das jeweilige Vergleichermittel (3, 4; 6, 7) anzulegen.

10. Anordnung nach einem der Ansprüche 7 bis 9, welche zusätzlich Mittel umfaßt zum Quantisieren des Signals von dem Ausgabemittel (9) in eine Vielzahl von Quantisierungs-Niveaus, die größer als die Anzahl von Symbolen in dem Datenalphabet ist.

11. Datenempfangs-Vorrichtung, welche umfaßt (i) einen Entzerrer, der eine Anordnung zum Schätzen eines Datensymbols nach einem der Ansprüche 7 bis 10 enthält, und (ii) Dekodiermittel zum Dekodieren der durch das Ausgabemittel (9) ausgegebenen Signale, wobei das Dekodiermittel auch eine Anordnung zum Schätzen eines Datensymbols nach einem der Ansprüche 7 bis 10 enthält.

**Revendications**

1. Procédé pour estimer un symbole de donnée dans une séquence de symboles de données transmis qui sont reçus sur un canal de communication, dans lequel une multitude d'états différents est associée à la transmission desdits symboles de données, procédé qui comprend les étapes consistant à :
   - déterminer pour chaque état la métrique du trajet partiel respectif ($M_A$) eu égard à la transition d'état correspondant à la transmission d'un premier type de symbole (A), et
   - déterminer pour chaque état la métrique du trajet partiel respectif ($M_B$) eu égard à la transition d'état correspondant à la transmission d'un second type de symbole (B),
      caractérisé par les étapes consistant à sélectionner la valeur maximum ($M_{Amax}$ et $M_{Bmax}$) des métriques des trajets partiels des premier et second types de symboles, respectivement, et
      - déterminer la différence ($M_{Amax}-M_{Bmax}$ ou $M_{Bmax}-M_{Amax}$) entre les valeurs maximales respectives des métriques des trajets partiels des premier et second types de symboles ($M_{Amax}$ et $M_{Bmax}$).

2. Procédé selon la revendication 1, comprenant l'utilisation de la différence entre les valeurs maximales respectives des métriques des trajets partiels des premier et second types de symboles comme une estimation représentative du symbole de donnée transmis.

3. Procédé selon la revendication 1, comprenant l'utilisation de la différence entre les valeurs maximales respectives des métriques des trajets partiels des premier et second types de symboles comme une valeur représentative du niveau de confiance d'un symbole de donnée estimé.

4. Procédé selon la revendication 1, comprenant l'utilisation de la différence entre les valeurs maximales respectives des métriques des trajets partiels des premier et second types de symboles à la fois comme une estimation représentative du symbole de donnée transmis et aussi comme une valeur représentative du niveau de confiance de ladite estimation.

5. Procédé selon la revendication 3 ou 4, dans lequel la différence entre les valeurs maximales respectives des métriques des trajets partiels des premier et second types de symboles est sortie à l'une d'une multitude de niveaux de quantification supérieurs au nombre des symboles dans l'alphabet des données.

6. Procédé selon l'une quelconque des revendications précédentes, dans lequel les étapes de sélection respectives comprennent l'étape de comparaison des métriques des trajets partiels pour chaque état, tour à tour, avec une valeur précédemment sélectionnée pour déterminer et choisir la plus grande des deux valeurs.

7. Agencement pour estimer un symbole de donnée dans une séquence de symboles de données transmis qui sont reçus sur un canal de communication, dans lequel une multitude d'états différents est associée à la transmission desdits symboles de données, comprenant:
   - un premier moyen (1) pour déterminer pour chaque état la métrique respective du trajet partiel ($M_A$) eu égard à la transition d'état correspondant à la transmission d'un premier type de symbole (A), et
   - un second moyen (2) pour déterminer pour chaque état la métrique respective du trajet partiel ($M_B$) eu égard à la transition d'état correspondant à la transmission d'un second type de symbole (B), caractérisé par :
   - un moyen (2, 3, 4) pour sélectionner la valeur maximum ($M_{Amax}$ et $M_{Bmax}$) des métriques des trajets partiels des premier et second types de symboles, respectivement, et

- un moyen (9) pour sortir un signal représentatif de la différence ($M_{Amax}$-$M_{Bmax}$ ou $M_{Bmax}$-$M_{Amax}$) entre la valeurs maximum de la métrique du trajet partiel du premier type de symbole ($M_{Amax}$) et la valeur maximum de la métrique du trajet partiel du second type de symbole ($M_{Bmax}$).

8. Agencement selon la revendication 7, comprenant un moyen (3, 4) pour comparer la métrique du trajet partiel du premier type de symbole pour chaque état à une valeur précédemment sélectionnée pour déterminer et choisir la plus grande des deux valeurs et un moyen (5, 6) pour comparer la métrique du trajet partiel du second type de symbole pour chaque état à une valeur précédemment sélectionnée pour déterminer et choisir la plus grande des deux valeurs.

9. Agencement selon la revendication 8, comprenant un moyen de multiplexeur respectif (2; 5) pour appliquer la métrique du trajet partiel pour chaque état, tour à tour, au moyen de comparaison respectif (3, 4; 6, 7).

10. Agencement selon l'une quelconque des revendications 7 à 9, comprenant en outre un moyen pour quantifier le signal provenant du moyen de sortie (9) en une multitude de niveaux de quantification supérieurs au nombre des symboles dans l'alphabet des données.

11. Appareil de réception de données comprenant (i) un égaliseur comportant un agencement afin d'estimer un symbole de donnée tel que revendiqué dans l'une des revendications 7 à 10, et (ii) un moyen de décodage afin de décoder les signaux émis par le moyen de sortie (9), ledit moyen de décodage comprenant aussi un agencement pour estimer un symbole de donnée tel que revendiqué dans l'une quelconque des revendications 7 à 10.

| | STATE | | | | DECISION ESTIMATED BIT | | k | TIME INCREMENT | k+1 | | STATE No. |
|---|---|---|---|---|---|---|---|---|---|---|---|
| 0 | 0 | 0 | 0 | | 0 | | | | | | 0 |
| 0 | 0 | 0 | 1 | | 1 | | | | | | 1 |
| 0 | 0 | 1 | 0 | | 0 | | | | | | 2 |
| 0 | 0 | 1 | 1 | | 1 | | | | | | 3 |
| 0 | 1 | 0 | 0 | | 0 | | | | | | 4 |
| 0 | 1 | 0 | 1 | | 1 | | | | | | 5 |
| 0 | 1 | 1 | 0 | | 0 | | | | | | 6 |
| 0 | 1 | 1 | 1 | | 1 | | | | | | 7 |
| 1 | 0 | 0 | 0 | | 0 | | | | | | 8 |
| 1 | 0 | 0 | 1 | | 1 | | | | | | 9 |
| 1 | 0 | 1 | 0 | | 0 | | | | | | 10 |
| 1 | 0 | 1 | 1 | | 1 | | | | | | 11 |
| 1 | 1 | 0 | 0 | | 0 | | | | | | 12 |
| 1 | 1 | 0 | 1 | | 1 | | | | | | 13 |
| 1 | 1 | 1 | 0 | | 0 | | | | | | 14 |
| 1 | 1 | 1 | 1 | | 1 | | | | | | 15 |

*Fig. 1.*

Fig. 2.

Fig. 2(cont.)

Fig.3a

Fig.3b

Fig.3c